# DEMANDE DE BREVET EUROPEEN

(11) **EP 3 431 657 A1**
(43) Date de publication de la demande: **23.01.2019**
(21) Numéro de dépôt: 18184026.5
(22) Date de dépôt: 17.07.2018
(51) Int. Cl.: E01C 19/18, B60P 1/26, B60P 1/28

(54) **BENNE AMÉLIORÉE**

(30) Priorité: 21.07.2017 FR 1770783
(71) Demandeur: Lhotellier SA, 76340 Blangy-sur-Bresle (FR)
(72) Inventeur: DEZ, Didier, 62156 Etaing (FR)
(74) Mandataire: Hege, Frédéric

(57) **Abrégé**

La présente invention concerne une benne inclinable comportant au moins une porte (2) et une trappe d'ouverture (3) sur sa face arrière. Cette benne est particulière en ce qu'elle comporte un bouclier (4) disposé à l'intérieur de la benne dans la partie arrière de celle-ci, ledit bouclier (4) s'étendant sur sensiblement toute la largeur, et sur au moins la moitié supérieure de la hauteur de ladite benne.

La présente invention concerne également des procédés de fabrication et d'utilisation de la benne selon l'invention.

## Description

La présente invention se situe dans le domaine du matériel de travaux publics. Elle concerne plus particulièrement une benne destinée à transporter des enrobés.

Lorsque des enrobés doivent être utilisés sur un chantier, par exemple pour la réfection d'une chaussée, il sont habituellement préparés puis acheminés sur le lieu du chantier dans une benne.

Une telle benne est décrite dans le document WO200658904. Pour sortir les enrobés de la benne, l'avant de la benne est habituellement relevé afin de faire sortir les enrobés par l'arrière, typiquement par l'intermédiaire de deux trappes se trouvant sur les portes arrières de la benne. Les ouvriers recueillent ainsi les enrobés, souvent dans une brouette, par lots d'environs 70 à 80 kg.

Or l'inclinaison de la benne nécessaire pour que l'enrobé descende jusqu'aux trappes fait exercer une pression très importante des enrobés sur les portes arrières, par exemple de l'ordre de 25 à 30 tonnes. Il arrive ainsi que des accidents se produisent par l'ouverture accidentelle des portes arrières, ce qui met gravement en danger les ouvriers sur le chantier. Le danger est encore augmenté par le fait que les enrobés sont à une température élevée, typiquement de l'ordre de 180 degrés.

La présente invention a pour objet de pallier au moins en partie à ces inconvénients en proposant une benne présentant un risque d'ouverture des portes sous l'effet du poids des enrobés, nettement réduit, voire nul, lors de l'inclinaison. A cet effet, elle propose une benne inclinable comportant au moins une porte et une trappe d'ouverture sur sa face arrière. Cette benne est particulière en ce qu'elle comporte un bouclier disposé à l'intérieur de la benne dans la partie arrière de celle-ci, ledit bouclier s'étendant sur sensiblement toute la largeur, et sur au moins la moitié supérieure de la hauteur de ladite benne.

Grâce à ces dispositions, la masse totale des matières situées dans la benne n'est pas en contact avec les portes arrières lors de l'inclinaison de la benne, et le risque d'ouverture accidentelle des portes est réduit, voire nul.

Selon d'autres caractéristiques :
- ledit bouclier peut s'étendre sur au moins les deux tiers supérieurs de la hauteur de ladite benne, afin qu'une plus grande partie de la matière située dans la benne soit retenue par le bouclier,
- l'extrémité inférieure dudit bouclier peut être située entre 40 et 60 cm, typiquement 50 cm, au-dessus du fond de la benne, limitant la quantité de matière pouvant passer sous le bouclier et exercer de la pression sur la porte arrière de la benne, tout en permettant un accès à la benne vide en position horizontale,
- l'extrémité inférieure dudit bouclier peut être disposée à l'extrémité arrière de la benne, ceci permettant d'optimiser l'usage du volume de la benne pour pouvoir y transporter le maximum de matière, et de réduire le risque que de la matière migre derrière le boulier pendant le transport de la benne, et réduise l'efficacité du bouclier,
- ledit bouclier peut être disposé incliné vers le bas vers l'arrière selon un angle d'inclinaison, lorsque la benne est à plat, ceci afin de guider les matières et d'aider leur écoulement sous le bouclier, notamment lorsque la benne est fortement inclinée,
- ledit angle d'inclinaison peut être compris entre 30° et 60°, ce qui est un mode de réalisation efficace de l'invention,
- ladite trappe d'ouverture peut être disposée comme partie de ladite porte, ce qui constitue un mode de réalisation simple et peu cher de l'invention.

La présente invention concerne aussi un procédé de fabrication d'une benne selon l'invention, comprenant les étapes suivantes :
- fabrication d'une benne,
- préparation d'une tôle de longueur la largeur interne de la benne,
- fixation de ladite tôle dans la partie arrière de la benne, sur les parois latérales de la benne, une telle fixation pouvant être réalisée par soudure, ou de manière amovible, par exemple par boulons, ou tout autre mode de fixation.

Grâce à ces dispositions, l'invention peut être réalisée de manière simple et peu chère, et être mise en place sur des bennes existantes.

La présente invention concerne enfin une utilisation d'une benne selon l'invention pour le chargement d'enrobés dans une brouette et comprenant les étapes suivantes :
- inclinaison de la benne,
- ouverture de la trappe jusqu'au remplissage de la brouette,
- fermeture de la trappe.

Le déchargement de la benne peut alors être réalisé d'une manière simple, à laquelle les travailleurs sont habitués, mais avec un risque d'ouverture accidentelle des portes considérablement réduit.

La présente invention sera mieux comprise à la lecture de la description détaillée qui fait suite, en référence aux figures annexées dans lesquelles :
- la figure 1 est une vue en coupe longitudinale d'une benne selon l'invention en position de transport,
- la figure 2 est une vue de la benne de la fig. 1 en position de déchargement,
- la figure 3 est une vue de derrière d'une benne selon l'invention.

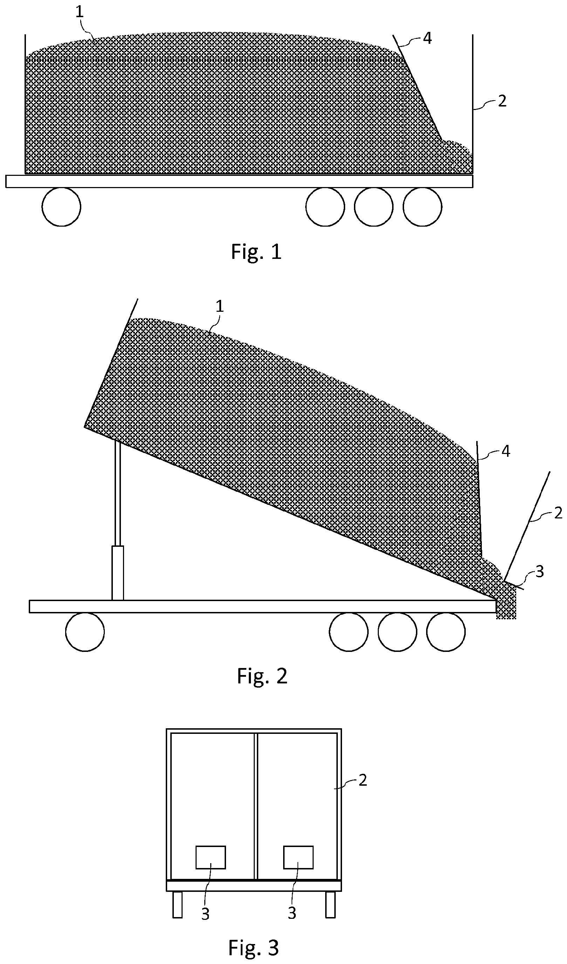

La benne selon l'invention, illustrée aux figs. 1 à 3, est une benne inclinable, par exemple par l'action de vérins situés sur le châssis du camion sur laquelle elle et disposée.

La benne est destinée à être chargée de matière 1, par exemple des enrobés. La benne peut comporter sur sa face arrière au moins une, en général deux portes 2 et sur l'une ou sur chacune des portes 2 une trappe d'ouverture 3. Les portes 2 peuvent s'étendre sur tout ou une partie de la face arrière, et est utilisée pour accéder à l'intérieur de la benne, par exemple pour la nettoyer. Les trappes 3 sont utilisées pour décharger la benne progressivement, par exemple par des lots de matière 1 qui peuvent être recueillis par les ouvriers dans une brouette. La trappe 3 peut faire partie de la porte 2.

La benne comporte également un bouclier 4, disposé dans sa partie arrière, à l'intérieur de la benne. Le bouclier 4 s'étend sur toute la largeur de la benne, et sur au moins la moitié supérieure de la hauteur de ladite benne. Le bouclier 4 permet qu'en position inclinée de déchargement, comme illustré sur la fig. 2, la totalité de la matière 1 chargée dans la benne ne repose pas sur la porte 2. Ceci permet de considérablement réduire le risque d'ouverture accidentelle de la porte 2 et de déversement soudain d'une grande quantité de matière 1.

On peut déterminer les dimensions du bouclier 4 afin de réduire au maximum la pression subie par la porte 2 lors de l'inclinaison de la benne, tout en permettant un écoulement de la matière 1 vers la trappe d'ouverture 3 quand on souhaite charger une brouette. On peut prévoir ainsi par exemple que le bouclier 4 s'étende sur les deux tiers supérieurs de la hauteur de la benne.

On peut aussi choisir une taille de bouclier 4 en fonction du débit maximal de sortie de matières 1 voulu, en sachant que les dimensions de la trappe 3 limite ce débit. On peut ainsi choisir la hauteur à laquelle est disposée l'extrémité inférieure du bouclier 4 par rapport au fond de la benne. Cette extrémité inférieure peut par exemple être située entre 40 cm et 60 cm, typiquement 50 cm, au-dessus du fond de la benne. De telles dimensions permettent, lorsque la benne est à plat, à un opérateur de passer sous le bouclier 4 pour accéder à la partie avant de l'intérieur de la benne, par exemple lors du nettoyage de la benne.

Dans un mode préféré de réalisation de l'invention, l'extrémité inférieure du bouclier 4 est disposée à l'extrémité arrière de la benne. Ceci permet de limiter au maximum l'espace utile perdu du fait du boulier 4, et situé au-dessus du bouclier 4 et entre ledit bouclier 4 et la face intérieure arrière de la benne. En effet cet espace n'est pas rempli de matières 1 dans une benne chargée. Par ailleurs cela isole entièrement l'espace situé au-dessus et à l'arrière du bouclier 4, ce qui permet de garantir que la matière 1 reste en dehors de cet espace, sans risque que la matière 1 ne migre petit à petit vers cet espace pendant le transport, du fait des vibrations induites par le roulement du camion porteur de la benne. Un tel risque est en particulier exclu dans la disposition où le bouclier 4 est disposé vertical sur la face arrière de la benne, auquel cas ledit espace est réduit à zéro. Mais c'est également le cas dans le cas d'un bouclier 4 incliné, comme décrit ci-après.

Dans un mode particulier de réalisation de l'invention, illustré aux fig. 1 et 2, le bouclier 4 est disposé incliné vers le bas vers l'arrière selon un angle d'inclinaison, qui peut par exemple être compris entre 30° et 60°, par exemple 45°. Cette disposition permet que lors du déchargement de la benne, les matières 1 sont guidées par le bouclier 4 vers l'ouverture sous le bouclier 4, et ainsi vers la trappe 3. Cette disposition permet d'assurer l'écoulement des matières 1 le long du bouclier 4, même en cas de forte inclinaison de la benne, supérieur à 45° par exemple, ce qui pourrait ne pas être assuré avec un bouclier 4 qui serait disposé vertical dans la benne posée à plat.

Le bouclier 4 a un avantage particulier quand la surface interne des portes 2 n'est pas lisse. L'écoulement des matières, au contact du bouclier 4 et non plus au contact des portes 2, est alors facilité.

La benne selon l'invention peut être utilisée pour charger des enrobés 1, par exemple dans une brouette, selon le procédé suivant :
- inclinaison de la benne, selon un angle par rapport à l'horizontale suffisant pour qu'une fois la trappe 3 ouverte les enrobés 1 s'écoulent vers l'arrière, et puissent sortir par la trappe 3,
- ouverture de la trappe 3, puis chargement de la brouette jusqu'à son remplissage, par exemple 70 ou 80 kg d'enrobés,
- fermeture de la trappe.

Ce procédé peut être répété le cas échéant pour remplir la brouette plusieurs fois, puis la benne peut être remise en position horizontale.

La benne selon l'invention peut être réalisée selon le procédé de fabrication suivant :
- fabrication d'une benne classique pour chargement de matières 1, du type permettant une inclinaison de l'avant vers le haut lors du déchargement,
- préparation d'une tôle de longueur la largeur interne de la benne, et de largeur correspondant à au moins une moitié de la hauteur de la benne, mais qui peut aussi représenter jusqu'à plus que la hauteur de la benne si on prévoit un bouclier 4 fortement incliné,
- fixation de ladite tôle dans la partie arrière de la benne, sur les parois latérales de la benne, une telle fixation pouvant être réalisée par soudure, ou de manière amovible, par exemple par boulons, ou tout autre mode de fixation.

L'avantage de la présente invention réside en particulier en ce que lorsque la benne est inclinée en vue de son déchargement, la pression exercée par les matières 1 sur les portes 2 est réduite en comparaison à la pression exercée par les matières 1 en l'absence de bouclier 4 selon l'invention. On arrive ainsi à limiter nettement, voire à supprimer, le risque d'accident lié à l'ouverture accidentelle des portes 2 du fait de la pression exercée par les matières 1.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Benne inclinable comportant au moins une porte (2) et une trappe d'ouverture (3) sur sa face arrière, **caractérisée en ce qu'**elle comporte un bouclier (4) disposé à l'intérieur de la benne dans la partie arrière de celle-ci, ledit bouclier (4) s'étendant sur sensiblement toute la largeur, et sur au moins la moitié supérieure de la hauteur de ladite benne.

2. Benne selon la revendication précédente, dans laquelle ledit bouclier (4) s'étend sur au moins les deux tiers supérieurs de la hauteur de ladite benne.

3. Benne selon l'une des revendications précédentes, dans laquelle l'extrémité inférieure dudit bouclier (4) est située entre 40 et 60 cm, typiquement 50 cm, au-dessus du fond de la benne.

4. Benne selon l'une des revendications précédentes, dans laquelle l'extrémité inférieure dudit bouclier (4) est disposée à l'extrémité arrière de la benne.

5. Benne selon l'une des revendications précédentes, dans laquelle ledit bouclier (4) est disposé incliné vers le bas vers l'arrière selon un angle d'inclinaison, lorsque la benne est à plat.

6. Benne selon la revendication précédente, dans laquelle ledit angle d'inclinaison est compris entre 30° et 60°.

7. Benne selon l'une des revendications précédentes, dans laquelle ladite trappe d'ouverture (3) est disposée comme partie de ladite porte (2).

8. Procédé de fabrication d'une benne selon l'une des revendications précédentes, comprenant les étapes suivantes :
- fabrication d'une benne,
- préparation d'une tôle de longueur la largeur interne de la benne,
- fixation de ladite tôle dans la partie arrière de la benne, sur les parois latérales de la benne, une telle fixation pouvant être réalisée par soudure, ou de manière amovible, par exemple par boulons, ou tout autre mode de fixation.

9. Utilisation d'une benne selon l'une des revendications 1 à 7 pour le chargement d'enrobés dans une brouette et comprenant les étapes suivantes :
- inclinaison de la benne,
- ouverture de la trappe (3) jusqu'au remplissage de la brouette,
- fermeture de la trappe (3).
